# EUROPEAN PATENT SPECIFICATION

(11) **EP 3 112 891 B1**
(45) Date of publication and mention of the grant of the patent: **24.04.2019**
(21) Application number: 15460076.1
(22) Date of filing: 23.09.2015
(51) Int. Cl.: G01S 3/00, H04B 7/08

(54) **DEVICE FOR DETERMINING DIRECTION OF ARRIVAL OF A RADIO SIGNAL**
VORRICHTUNG ZUR BESTIMMUNG DER EMPFANGSRICHTUNG EINES FUNKSIGNALS
DISPOSITIF DE DÉTERMINATION DE DIRECTION D'ARRIVÉE D'UN SIGNAL RADIO

(30) Priority: 02.07.2015 PL 41299115
(43) Date of publication of application: 04.01.2017
(73) Proprietor: Politechnika Gdanska, 80-233 Gdansk (PL)
(72) Inventor: Cwalina, Krzystof, 84-23 Rumia (PL); Rajchowski, Piotr, 80-373 Gdansk (PL); Sadowski, Jaroslaw, 80-464 Gdansk (PL); Stefanski, Jacek, 80-280 Gdansk (PL); Katulski, Ryszard, 80-391 Gdansk (PL)

(56) References cited:
- EP-A1- 1 545 024
- KR-A- 20120 035 907

## Description

Subject of the Invention is a device for determining direction of arrival of a radio signal developed in Software Defined Radio technology SDR.

There are known devices for determining direction of arrival of a radio signal, called radio direction finders (RDF), based on analysis of an amplitude of a signal, either other signal parameters.

There are known direction finders (DF) using the directivity of an antenna radiation pattern for estimation direction of arrival of a radio signal, analyzing the amplitude of a received signal. In such direction finders it is obligatory to use mechanical system for antenna positioning.

There are known direction finders using multi-element antenna arrays, consisting of antennas with omnidirectional radiation pattern. Received radio signal is analyzed in digital receiver. In such direction finders usually antenna switches are used. Such direction finders are not scalable. Ability of modification is limited to change in radiation pattern of receiving antenna arrays and their operational frequency. Such a change usually leads to the necessity of usage other receivers of radio signal.

There are also known direction finders using Doppler effect for determining direction of arrival of a radio signal. This method requires mechanism simulating movement of an antenna array. EP1545024 describes an adaptive antenna radio communication device provided with a direction estimate unit of arrival paths.

The goal of the Invention is to build wideband radio direction finder with high resolution of determining direction of arrival of a radio signal in its full operational frequency band.

Device for determining direction of arrival of a radio signal is characterized by the Invention, that antenna array consisting of N receiving antennas and reference antenna is connected with antenna switching unit. It is connected via Ethernet network with digital device, in which algorithms for estimation direction of arrival of radio signal, controlling the antenna switching unit and software defined radio platform are implemented. Antenna switching unit is also connected with software defined radio platform, which via Ethernet network is connected with digital device. Antenna switching unit consists of K parallelly connected antenna switches, having W inputs of a radio signal, controller and signal splitter. Antenna switches are connected by their inputs to receiving antennas, to signal splitter and to controller. Signal splitter is connected with the controller, whereas reference antenna is connected to signal splitter. Antenna switching unit is also connected with software defined radio platform through K switches, where K < N, and through signal splitter. Number of W inputs of a radio signal to antenna switches is determined by the relationship: W ≥ (N + K).

The device according to the Invention can be used both, in stationary and mobile radio direction finders. Operational location is dependent on mechanical structure of antenna array.

The Invention allows adaptation to the number of present SDR receivers appropriate number of received radio signals from antenna array.

The Invention ensures high angular resolution in wide operational frequency band by using software defined radio technology.

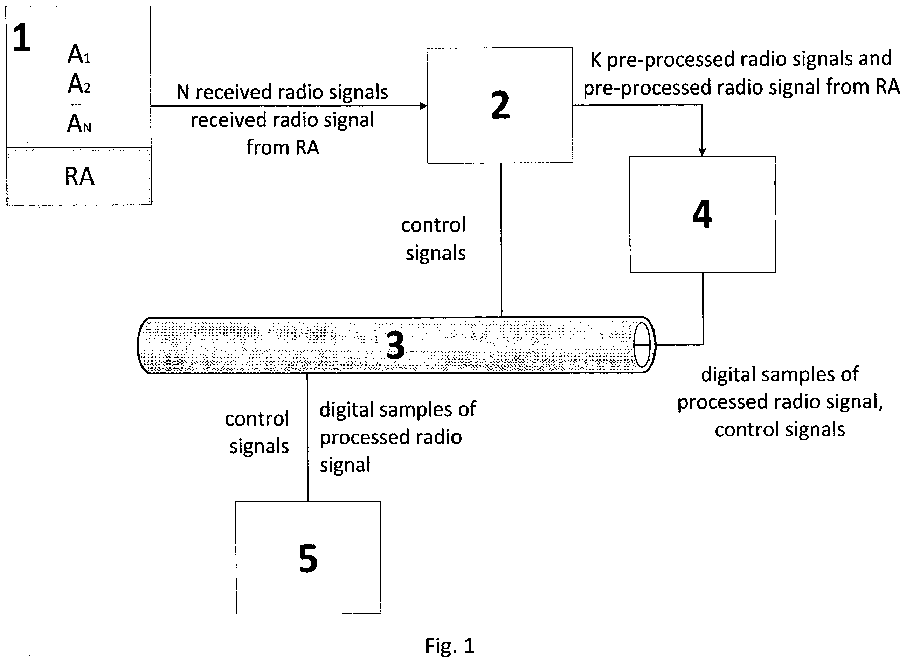

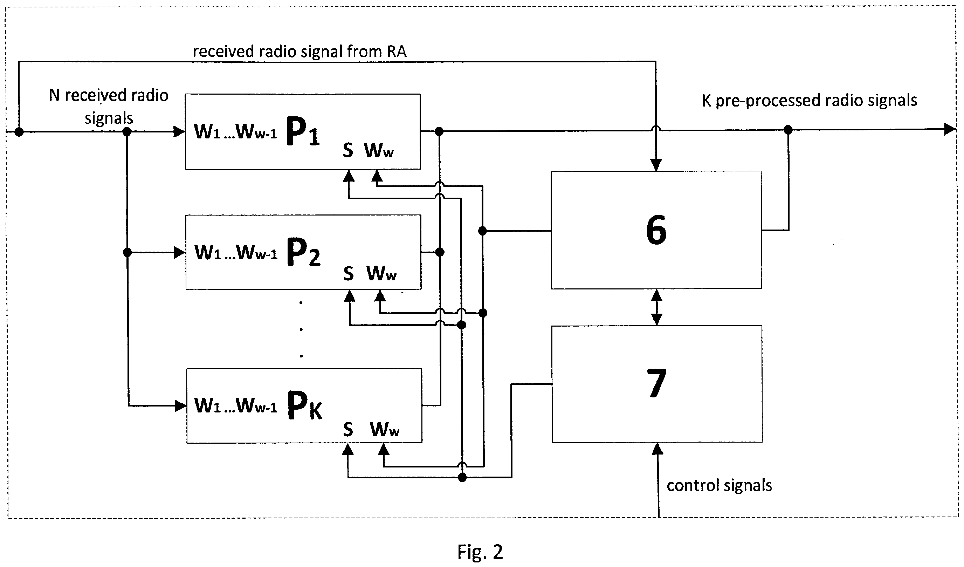

The Invention is described in sample realization, where fig. 1 presents block diagram of the device, fig. 2 presents block diagram of antenna switching unit, where direction of signal flow is marked and fig. 3 presents block diagram of radio direction finder with two antenna switches and two SDR receivers.

Antenna array 1 consisting of reference antenna RA and N receiving antennas A₁, A₂, ... A_{N} is connected with antenna switching unit 2, which one is connected via Ethernet network 3 with digital device 5 in a form of a PC class computer.

In digital device algorithms for estimation direction of arrival of radio signal, controlling the antenna switching unit 2 and software defined radio platform 4 are implemented.

Antenna switching unit 2 is also connected with software defined radio platform 4, which via Ethernet network 3 is connected with digital device 5.

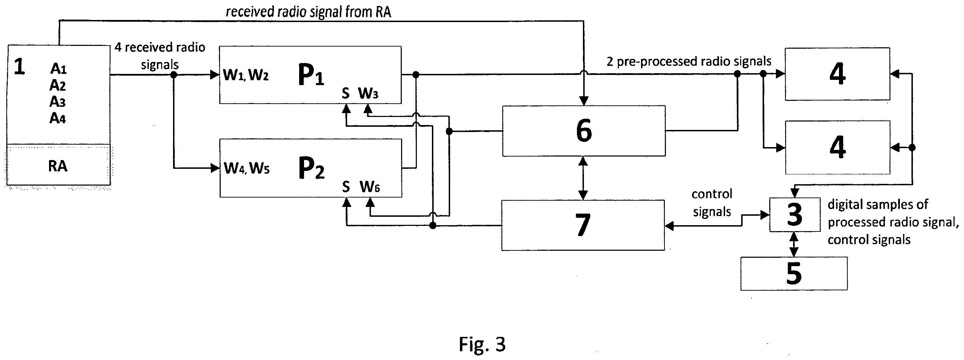

As it is shown in the fig. 3 antenna switching unit 2 consists of two parallelly connected antenna switches: antenna switch P₁ with inputs W₁, W₂, W₃ of a radio signal and input S of a control signal and antenna switch P₂ with inputs W₄, W₅, W₆ of a radio signal and input S of a control signal and controller 7 and also signal splitter 6.

Antenna switches P₁ and P₂ are connected by their inputs W₁, W₂, W₄, W₅ to receiving antennas A₁, A₂, A₃, A₄ and independently to signal splitter 6 and by inputs S do controller 7.

Signal splitter 6 is also connected with controller 7, wherein reference antenna RA is connected to signal splitter 6.

Antenna switching unit 2 is also connected with software defined radio platform 4 though antenna switches P₁ and P₂ and through signal splitter 6.

Received radio signal by antenna array 1, consisting of four receiving antennas A₁, A₂, A₃, A₄ and reference antenna RA is routed to antenna switching unit 2, but signal from reference antenna is routed to signal splitter 6 and signal form receiving antennas A₁, A₂, A₃, A₄ is routed to inputs W₁, W₂, W₄, W₅ of a radio signal of an antenna switches P₁ and P₂. Radio signal is pre-processed in antenna switches P₁, P₂ with reference to control signals from controller 7 presented on its inputs S, that are send to controller by digital device 5 via Ethernet network 3. Preprocessed radio signal from antenna switches P₁, P₂ and signal splitter 6 is routed to software defined radio platform 4, consisting of two SDR receivers. Software defined radio platform 4 is controlled by control signals, send via Ethernet network 3 by digital device. Digital samples of processed radio signal are send via Ethernet network 3 to digital device 5, where direction of arrival of a radio signal is determined.

## Claims

1. A device for determining a direction of arrival of a radio signal consisting of an antenna array (1) including a reference antenna (RA) and N receiving antennas, (A₁, A₂...A_{N}), an antenna switching unit (2) and a receiving circuit **characterized in that** the antenna array (1) is connected to the antenna switching unit (2), said antenna switching unit being connected via Ethernet network (3) to a digital device (5), in which algorithms for estimating the direction of arrival of a radio signal, and for controlling the antenna switching unit (2) and a software defined radio platform (4) are implemented, said antenna switching unit (2) being also connected to the software defined radio platform (4) that is connected with digital device (5) via Ethernet network (3), whereas the antenna switching unit (2) consists of K parallelly connected antenna switches (P₁, P₂, ... P_{K}), having W inputs (W₁, W₂, ... W_{W}) of a radio signal, said antenna switching unit comprising a controller (7) and a signal splitter (6), said antenna switches (P₁, P₂, ... P_{K}) being connected by their inputs (W₁, W₂, ... W_{W}) to the receiving antennas (A₁, A₂....A_{N}) to the signal splitter (6) and to the controller (7), the signal splitter (6) being connected to the controller (7), while the reference antenna (RA) is connected to the signal splitter (6), said antenna switching unit (2) being also connected to the software defined radio platform (4) through K switches (P₁, P₂, ... P_{K}) and through the signal splitter (6), and number of W inputs of a radio signal to antenna switches (P₁, P₂, ... P_{K}) being determined by the relationship: W ≥ (N + K).

## Patentansprüche

1. Vorrichtung zum Bestimmen der Ankunftsrichtung eines Funksignals, bestehend aus einem Antennenarray, das eine Referenzantenne und N Empfangsantennen, Antennenschalteinheit und Empfangsschaltung umfasst, **dadurch gekennzeichnet, dass** das Antennenarray (1) mit der Antennenschalteinheit (2) verbunden ist, welche einer ist über das Ethernet-Netzwerk (3) mit dem digitalen Gerät (5) verbunden, in dem Algorithmen zur Abschätzung der Ankunftsrichtung eines Funksignals, zur Steuerung der Antennenschalteinheit (2) und der Software definierten Funkplattform (4) sind umgesetzt und die Antennenschalteinheit (2) ist ebenfalls mit der als Software definierten Funkplattform (4) verbunden, die über das Ethernet-Netzwerk (3) mit dem digitalen Gerät (5) verbunden ist, während die Antennenschalteinheit (2) aus diesem besteht K parallel geschaltete Antennenschalter (P₁, P₂, ... P_{K}) mit w Eingängen (W₁, W₂, ... W_{w}) eines Funksignals, der Steuerung (7) und dem Signalverteiler (6), wobei die Antenne wechselt (P₁, P₂,... P_{K}) sind über ihre Eingänge verbunden (W₁, W₂,... W_{w}) an die Empfangsantennen (1), an den Signalteiler (6) und an die Steuerung (7) ist der Signalteiler (6) mit der Steuerung (7) verbunden, an der sich die Referenzantenne befindet (RA) ist mit dem Signalverteiler (6) verbunden, wobei die Antennenschalteinheit (2) auch über K-Schalter (P₁, P₂, ... P_{K}) und über den Signalverteiler (6) mit der durch Software definierten Funkplattform (4) verbunden ist) und die Anzahl der W_{w}-Eingänge eines Funksignals zu den Antennenschaltern (P₁, P₂,... P_{K}) wird durch die Beziehung bestimmt: w ≥ (N + K).

## Revendications

1. Dispositif de détermination du sens d'arrivée d'un signal radio constitué d'un réseau d'antennes comprenant une antenne de référence et N antennes de réception, une unité de commutation d'antenne et un circuit de réception, **caractérisé en ce que** le réseau d'antennes (1) est connecté à l'unité de commutation d'antenne (2) qui l'un est connecté via le réseau Ethernet (3) au dispositif numérique (5), dans lequel des algorithmes permettant d'estimer la direction d'arrivée d'un signal radio, permettent de commander l'unité de commutation d'antenne (2) et la plate-fomle radio définie par logiciel (4) implémenté et l'unité de commutation d'antenne (2) est également connectée à la plate-forme radio définie par logiciel (4), laquelle est connectée via le réseau Ethernet (3) au dispositif numérique (5), tandis que l'unité de commutation d'antenne (2) est constituée de K commutateurs d'antenne (P₁, P₂,... P_{K}) connectés en parallèle, ayant w entrées (W₁, W₂,... W_{w}) d'un signal radio, le contrôleur (7) et le séparateur de signal (6), où l'antenne commute (P₁, P₂,... P_{K}) sont connectés par leurs entrées (W₁, W₂,... W_{w}) aux antennes de réception (1), au séparateur de signaux (6) et au contrôleur (7), le séparateur de signaux (6) est connecté an contrôleur (7), où l'antenne de référence (RA) est connecté au séparateur de signaux (6), l'unité de commutation d'antenne (2) étant également connectée à la plate-forme radio définie par logiciel (4) par le biais de K commutateurs (P₁, P₂,... P_{K}) et par le séparateur de signaux (6). ) et le nombre d'entrées W_{w} d'un signal radio vers les commutateurs d'antenne (P₁, P₂,... P_{K}) est déterminé par la relation: w ≥ (N + K).
